# EUROPÄISCHE PATENTSCHRIFT

(11) **EP 2 850 312 B1**
(45) Veröffentlichungstag und Bekanntmachung des Hinweises auf die Patenterteilung: **30.03.2016**
(21) Anmeldenummer: 13715178.3
(22) Anmeldetag: 02.04.2013
(51) Int. Cl.: F02M 61/14

(54) **ANORDNUNG MIT EINEM BRENNSTOFFVERTEILER UND MEHREREN BRENNSTOFFEINSPRITZVENTILEN**
ARRANGEMENT HAVING A FUEL DISTRIBUTOR AND HAVING MULTIPLE FUEL INJECTION VALVES
ENSEMBLE COMPRENANT UN DISTRIBUTEUR DE CARBURANT ET PLUSIEURS SOUPAPES D'INJECTION DE CARBURANT

(30) Priorität: 14.05.2012 DE 102012208039
(43) Veröffentlichungstag der Anmeldung: 25.03.2015
(73) Patentinhaber: Robert Bosch GmbH, 70442 Stuttgart (DE)
(72) Erfinder: POHLMANN, Jens, 74321 Bietigheim-Bissingen (DE); FISCHER, Matthias, 75223 Niefern-Oeschelbronn (DE); RIEMER, Martin, 74199 Untergruppenbach (DE); FRIEDRICH, Markus, 85368 Moosburg (DE); REHWALD, Andreas, 74321 Bietigheim-Bissingen (DE); MAYER, Michael, 72827 Wannweil (DE); UHLENBROCK, Dietmar, 70439 Stuttgart (DE); KANNAN, Venkatesh, Novi, MI 48377 (US); MAESS, Matthias, 71034 Boeblingen (DE); GUENGOER, Goekhan, 71735 Eberdingen (DE)
(86) Internationale Anmeldenummer: PCT/EP2013/056862
(87) Internationale Veröffentlichungsnummer: WO 2013/170998

(56) Entgegenhaltungen:
- EP-A1- 2 072 800
- EP-A2- 2 034 171
- US-A- 5 301 647
- US-B1- 7 334 571

## Beschreibung

### Stand der Technik

Die Erfindung betrifft eine Anordnung, insbesondere eine Brennstoffeinspritzanlage zur Hochdruckeinspritzung bei Brennkraftmaschinen, mit einem Brennstoffverteiler und mehreren Brennstoffeinspritzventilen. Speziell betrifft die Erfindung das Gebiet der Brennstoffeinspritzanlagen für gemischverdichtende, fremdgezündete Brennkraftmaschinen, bei denen eine direkte Einspritzung des Brennstoffs in Brennräume der Brennkraftmaschine erfolgt.

Aus der EP 2 151 572 A2 sind eine Brennstoffverteilerleiste und mehrere an der Brennstoffverteilerleiste angeordnete Brennstoffeinspritzventile bekannt. Zur Verbindung der Brennstoffeinspritzventile mit der Brennstoffverteilerleiste ist ein kragenförmiges Element mit beidseitigen Zungen vorgesehen, das um einen oberen Brennstoffeinlassstutzen des Brennstoffeinspritzventils gefügt ist. Außerdem ist ein Haltebügel vorgesehen, der einen zylindrischen Körper eines Injektoranschlusses der Brennstoffverteilerleiste von oben entlang einer Längsachse umgreift, wobei die Zungen des Kragens in Öffnungen des Haltebügels eingreifen. Dadurch ergibt sich eine Befestigung des Brennstoffeinspritzventils an dem zylindrischen Körper des Injektoranschlusses.

Die aus der EP 2 151 572 A2 bekannte Ausgestaltung hat den Nachteil, dass die Brennstoffverteilerleiste im Betrieb zu Schwingungen im hörbaren Frequenzbereich angeregt werden kann. Dies geschieht besonders durch Geräuschquellen in den Brennstoffeinspritzventilen. Der Körperschall breitet sich nämlich hierbei von den Brennstoffeinspritzventilen über die Injektoranschlüsse, die Brennstoffverteilerleiste und die Railhalter gegebenenfalls auch auf die Anbaustruktur aus, von wo störende Geräusche abgestrahlt werden. Diese können unter Umständen sogar bis ins Innere des Fahrzeugs dringen.

Aus US 7 334 571 ist eine Anordnung als Brennstoffeinspritzanlage zur Hochdruckeinspritzung bekannt.

### Offenbarung der Erfindung

Die erfindungsgemäße Anordnung mit den Merkmalen des Anspruchs 1 hat den Vorteil, dass eine verbesserte Schwingungsdämpfung gewährleistet ist. Speziell ergibt sich der Vorteil, dass Schwingungen, die insbesondere im Bereich der Brennstoffeinspritzventile entstehen, in Bezug auf eine Übertragung auf den Brennstoffverteiler wirkungsvoll gedämpft werden können und somit störende Geräusche reduziert sind.

Durch die in den Unteransprüchen aufgeführten Maßnahmen sind vorteilhafte Weiterbildungen der im Anspruch 1 angegebenen Anordnung möglich.

Speziell eignet sich die Anordnung für Brennkraftmaschinen zur Benzindirekteinspritzung. Der Brennstoffverteiler ist hierfür vorzugsweise als Brennstoffverteilerleiste ausgestaltet. Der Brennstoffverteiler dient zum Speichern von unter hohem Druck stehenden Brennstoff und zur Verteilung des Brennstoffs auf die mehreren Brennstoffeinspritzventile, die insbesondere als Hochdruckeinspritzventile ausgestaltet sind. Die Brennstoffeinspritzventile spritzen dann den zum Verbrennungsvorgang notwendigen Brennstoff unter hohem Druck in den jeweiligen Brennraum der Brennkraftmaschine ein. Der Brennstoff wird über eine Hochdruckpumpe verdichtet und mengengesteuert über eine Hochdruckleitung in den Brennstoffverteiler gefördert.

Die Anordnung kann in vorteilhafter Weise als Brennstoffeinspritzanlage zur Hochdruckeinspritzung bei Brennkraftmaschinen ausgestaltet sein. Hierbei kann der Brennstoffverteiler auf geeignete Weise mit einer Anbaustruktur verbunden sein. Bei der Anbaustruktur kann es sich um den Zylinderkopf der Brennkraftmaschine handeln. Es ist auch eine Anbindung über Distanzhülsen oder über weitere Verbindungselemente möglich.

Die Brennstoffeinspritzventile können an den Tassen des Brennstoffverteilers gewissermaßen aufgehängt werden. Hierbei ist insbesondere eine kardanische Befestigung an den Tassen möglich. Das Haltelement kann insbesondere als U-förmiger Clip ausgestaltet sein. Über das Halteelement werden die quasistatischen Kräfte übertragen. Gleichzeitig erfüllt das Halteelement die Funktion, dass die relative Auslenkung eines Brennstoffeinspritzventils gegenüber der zugeordneten Tasse unter Einwirkung der Betriebskräfte unter einem definierten Grenzwert bleibt, um so beispielsweise eine O-Ringdichtung vor Verschleiß zu schützen.

Durch ein oder mehrere Dämpfungsschichten wird darüber hinaus eine schwingungstechnische Entkopplung und Dämpfung zwischen den Brennstoffeinspritzventilen und dem Brennstoffverteiler erzielt, wobei die sonstigen Anforderungen weiterhin gewährleistet sind.

Vorteilhaft ist es, dass der Bund des Brennstoffeinspritzventils zumindest mittelbar an der Stützfläche des Halteelements abgestützt ist. Dies umfasst die Möglichkeit, dass der Bund des Brennstoffeinspritzventils direkt an der Stützfläche des Haltelements abgestützt ist. Besonders vorteilhaft ist es allerdings, dass der Bund des Brennstoffeinspritzventils mittels der Dämpfungsschicht an dem Halteelement abgestützt ist. Dadurch wird die Schwingungsentkopplung weiter verbessert. Speziell kann der Bund des Brennstoffeinspritzventils mittels der Dämpfungsschicht an der Stützfläche des Halteelements abgestützt sein. Die Stützfläche des Halteelements kann somit sowohl eine Abstützung für die Tasse als auch für den Bund des Brennstoffeinspritzventils gewährleisten.

Vorteilhaft ist es, dass das Halteelement zumindest einen Halteabschnitt aufweist, dass die Tasse einen Kragen aufweist und dass der Halteabschnitt des Halteelements den Kragen der Tasse hintergreift. Hierbei ist es ferner vorteilhaft, dass der Halteabschnitt als U-förmig gebogener Halteabschnitt ausgestaltet ist. Hierdurch ist eine kompakte Ausgestaltung des Halteelements möglich. Insbesondere kann das Halteelement hierdurch als Halteclip ausgestaltet sein. Der Halteabschnitt des Halteelement kann direkt an dem Kragen der Tasse anliegen. Besonders vorteilhaft ist es allerdings, dass der Halteabschnitt des Halteelements mittels einer weiteren Dämpfungsschicht an dem Kragen der Tasse abgestützt ist. Hierdurch wird die Bedämpfung von Schwingungen weiter verbessert. Besonders vorteilhaft ist es allerdings auch, dass sich die Dämpfungsschicht, die an der Stützfläche vorgesehen ist, auch entlang der Innenseite des Halteabschnitts des Halteelements erstreckt und dass der Halteabschnitt des Halteelements mittels der Dämpfungsschicht an dem Kragen der Tasse abgestützt ist. Hierbei kann die Dämpfungsschicht gewissermaßen beidseitig des Kragens der Tasse wirken.

In vorteilhafter Weise basiert die Dämpfungsschicht beziehungsweise die weitere Dämpfungsschicht auf einem viskoelastischen Werkstoff. Hierbei kann die Dämpfungsschicht beziehungsweise die weitere Dämpfungsschicht in vorteilhafter Weise mit dem Halteelement verbunden sein. Die Verbindung kann beispielsweise durch Vulkanisieren ausgestaltet sein. Der viskoelastische Werkstoff für die Dämpfungsschicht kann insbesondere auf einem Gummi basieren. Der Begriff des Gummis ist hierbei allgemein zu verstehen und umfasst neben einem Naturkautschuk auch synthetische Gummiwerkstoffe.

Vorteilhaft ist es auch, dass die Dämpfungsschicht beziehungsweise die weitere Dämpfungsschicht als separates Einlegeteil ausgestaltet ist. Hierdurch kann auch eine modulare Ausgestaltung gewährleistet werden, bei der je nach Anwendungsfall eine geeignete Dämpfungsschicht beziehungsweise weitere Dämpfungsschicht mit einem geeignet ausgestalteten Halteelement kombiniert wird.

### Kurze Beschreibung der Zeichnungen

Bevorzugte Ausführungsbeispiel der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 eine Anordnung mit einem Brennstoffverteiler und mehreren Brennstoffeinspritzventilen in einer schematischen Schnittdarstellung entsprechend einem ersten Ausführungsbeispiel der Erfindung;
Fig. 2 eine auszugsweise, schematische Explosionsdarstellung der in Fig. 1 dargestellten Anordnung entsprechend dem ersten Ausführungsbeispiel der Erfindung;
Fig. 3 einen auszugsweisen, schematischen, axialen Schnitt durch die in Fig. 2 dargestellte Anordnung entsprechend einem zweiten Ausführungsbeispiel der Erfindung und
Fig. 4 einen auszugsweisen, schematischen, axialen Schnitt durch die in Fig. 2 dargestellte Anordnung entsprechend einem dritten Ausführungsbeispiel der Erfindung.

### Ausführungsformen der Erfindung

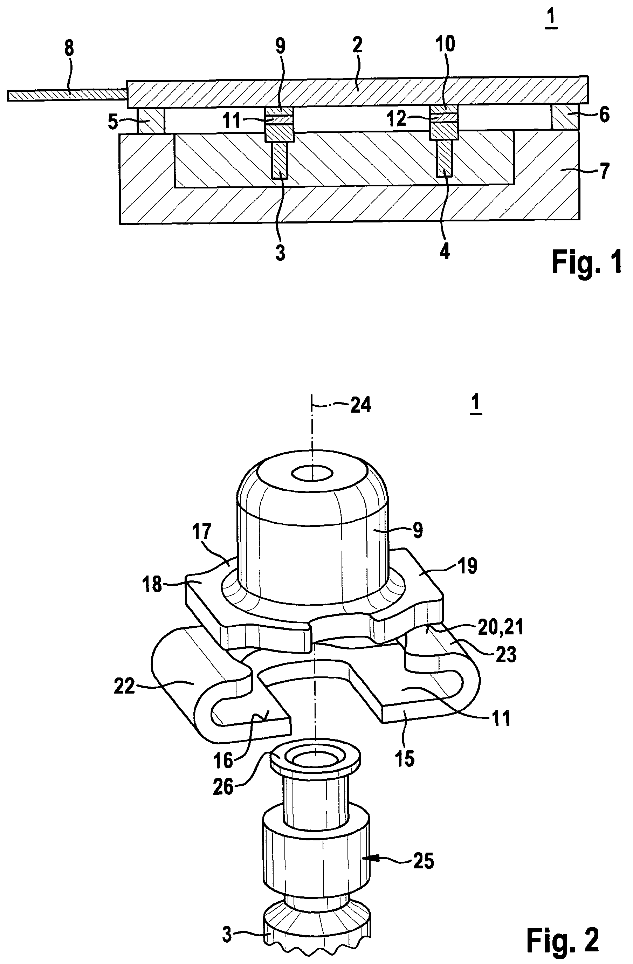

Fig. 1 zeigt eine Anordnung 1 mit einem Brennstoffverteiler 2 und mehreren Brennstoffeinspritzventilen 3, 4 in einer schematischen Schnittdarstellung entsprechend einem ersten Ausführungsbeispiel. Die Anordnung 1 kann insbesondere als Brennstoffeinspritzanlage zur Hochdruckeinspritzung bei Brennkraftmaschinen dienen. Der Brennstoffverteiler 2 kann an vorgegebenen Anschraubpunkten über Halter 5, 6 oder dergleichen an einer Anbaustruktur 7, insbesondere einem Zylinderkopf 7, befestigt werden. Zur Vereinfachung der Darstellung sind in der Fig. 1 nur zwei Brennstoffeinspritzventile 3, 4 dargestellt. Es kann jedoch auch eine größere Anzahl an Brennstoffeinspritzventilen vorgesehen sein. Der Brennstoffverteiler 2 ist in diesem Ausführungsbeispiel als Brennstoffverteilerleiste 2 mit einem länglichen, rohrförmigen Grundkörper ausgestaltet. Hierbei ist eine Hochdruckleitung 8 vorgesehen, die mit dem Brennstoffverteiler 2 verbunden ist. Im Betrieb wird über die Hochdruckleitung 8 unter hohem Druck stehender Brennstoff in den Brennstoffverteiler 2 geführt.

Der Brennstoffverteiler 2 weist mehrere Tassen 9, 10 auf. Das Brennstoffeinspritzventil 3 ist an der Tasse 9 angeordnet. Das Brennstoffeinspritzventil 4 ist an der Tasse 10 angeordnet. Ferner sind Dämpfungsschichten 11, 12 vorgesehen. Die Dämpfungsschicht 11 wirkt zwischen dem Brennstoffeinspritzventil 3 und der Tasse 9. Die Dämpfungsschicht 12 wirkt zwischen dem Brennstoffeinspritzventil 4 und der Tasse 10. In der Fig. 1 ist der jeweilige Kraftübertragungspfad von dem Brennstoffeinspritzventil 3 beziehungsweise dem Brennstoffeinspritzventil 4 und dem Brennstoffverteiler 2 dargestellt, in dem die Dämpfungsschicht 11 beziehungsweise die Dämpfungsschicht 12 liegt. Die konstruktive Ausgestaltung und Verbindung des Brennstoffeinspritzventils 3 mit dem Brennstoffverteiler 2 entsprechend dem ersten Ausführungsbeispiel ist nachfolgend anhand der Fig. 2 näher beschrieben. Entsprechend ist die Verbindung zwischen dem Brennstoffeinspritzventil 4 und dem Brennstoffverteiler 2 ausgestaltet.

Fig. 2 zeigt eine auszugsweise, schematische Explosionsdarstellung der in Fig. 1 dargestellten Anordnung des ersten Ausführungsbeispiels. Die Anordnung 1 weist ein Halteelement 15 auf, das zum Verbinden des Brennstoffeinspritzventils 3 mit der Tasse 9 des Brennstoffverteilers 2 dient. Das Halteelement 15 ist als Halteclip 15 ausgestaltet. Das Halteelement 15 weist eine Stützfläche 16 auf, an der die Dämpfungsschicht 11 angeordnet ist. Ferner weist die Tasse 9 einen Kragen 17 mit ausgeformten Zungen 18, 19 auf. Ferner ist an einer Unterseite 20 der Tasse 9 eine Anlagefläche 21 ausgestaltet. In diesem Ausführungsbeispiel ist die Anlagefläche 21 durch die Unterseite 20 der Tasse 9 gebildet. Es sind aber auch andere Ausgestaltungen denkbar. Beispielsweise ist die Unterseite 20 nicht notwendigerweise eben ausgestaltet und die Anlagefläche 21 kann teilweise durch die Unterseite 20 der Tasse 9 gebildet sein.

Das Halteelement 15 weist Halteabschnitte 22, 23 auf, die in diesem Ausführungsbeispiel als U-förmig gebogene Halteabschnitte 22, 23 ausgestaltet sind.

Im montierten Zustand ist der Kragen 17 in das Halteelement 15 eingesetzt. Der Halteabschnitt 22 hintergreift im montierten Zustand die Zunge 18 des Kragens 17. Ferner hintergreift der Halteabschnitt 23 im montierten Zustand die Zunge 19 des Kragens 17. Dadurch ist entlang einer Längsachse 24 eine formschlüssige Verbindung zwischen der Tasse 9 und dem Halteelement 15 gebildet. Die Dämpfungsschicht 11 befindet sich hierbei zwischen der Anlagefläche 21 der Tasse 9 und der Stützfläche 16 des Halteelements 15.

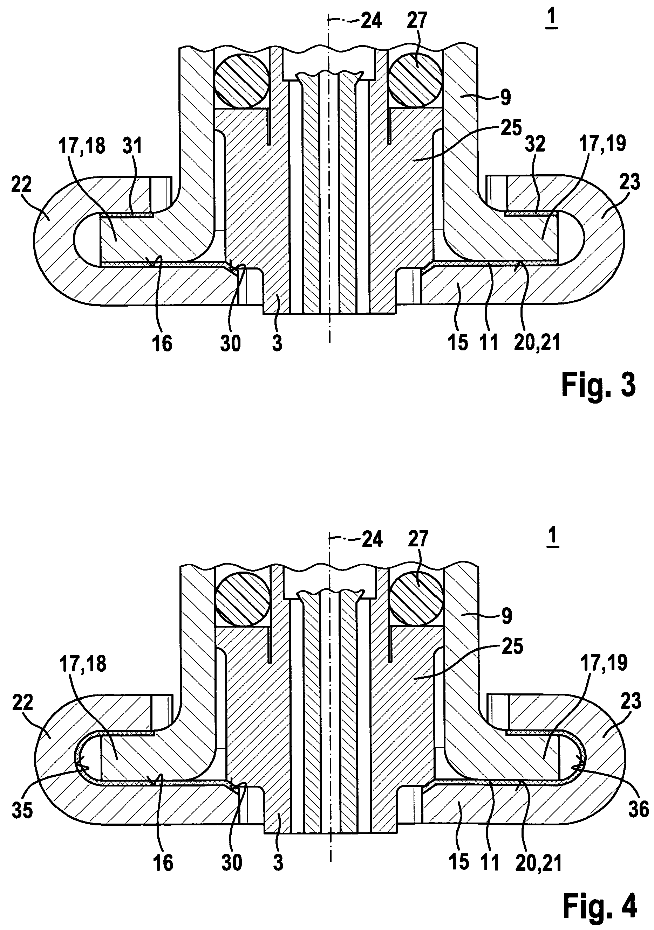

Das Brennstoffeinspritzventil 3 weist einen Bund 25 auf. Der Bund 25 kann hierbei durch eine Anschlusshülse 25 gebildet sein. Im montierten Zustand stützt sich der Bund 25 des Brennstoffeinspritzventils 3 mittels der Dämpfungsschicht 11 an der Stützfläche 16 des Halteelements 15 ab. Ein Brennstoffstutzen 26 des Brennstoffeinspritzventils 3 befindet sich dann innerhalb der Tasse 9. Zwischen dem Brennstoffstutzen 26 und dem Bund 25 kann ein Dichtring 27 (Fig. 3) vorgesehen sein. Der Dichtring 27 wirkt mit der Tasse 9 zusammen, um eine Abdichtung zu bilden. Dies ermöglicht die Zufuhr des unter hohem Druck stehenden Brennstoffs aus dem Brennstoffverteiler 2 über den Brennstoffstutzen 26 in das Brennstoffeinspritzventil 3.

Durch die Dämpfungsschicht 11 wird eine akustische Entkopplung ermöglicht. Die Dämpfungsschicht 11 kann aus einem viskoelastischen Werkstoff gebildet sein, der eine Entkopplung oder Isolation der am Brennstoffeinspritzventil 3 entstehenden Geräuschquellen gegenüber dem Brennstoffverteiler 2 ermöglicht. Außerdem werden dadurch vom Brennstoffverteiler 2 weniger Körperschallanteile an die Anbaustruktur, insbesondere den Zylinderkopf 7, übertragen. Infolge dieser beiden Effekte wird die Schallabstrahlung und Schallübertragung von der Anordnung 1 im Motor reduziert.

Das mechanische Wirkprinzip zur Schwingungsreduzierung durch die Dämpfungsschicht 11 und in entsprechender Weise durch die Dämpfungsschicht 12 stellt sich wie folgt dar. Unter Betriebsbelastung wird die Dämpfungsschicht 11 dynamisch stark beansprucht, womit ein hoher Anteil an Vibrationsenergie durch die Materialdämpfung des Elastomers dissipiert wird. Die Dissipation von Körperschallenergie führt in jedem Fall zu einer Bedämpfung von Schwingformen des Brennstoffeinspritzventils 3 und des Brennstoffverteilers 2. Somit kommt es zu einer Reduzierung aller Körperschallanteile, die durch die Dämpfungsschicht 11 vom Brennstoffeinspritzventil 3 in den Brennstoffverteiler 2 übertragen werden. Diese Eigenschaft entspricht einer Entkopplung beziehungsweise Isolation des Brennstoffeinspritzventils 3 gegenüber dem Brennstoffverteiler 2. Reine Metallkontakte, über die eine Körperschallübertragung effizient möglich wäre, werden reduziert oder ganz verhindert. Speziell ist eine Ausgestaltung möglich, bei der die Kontakte nur über Kunststoffbauteile hergestellt werden.

Die Eigenschaften der Dämpfungsschicht 11, wie beispielsweise Dicke, Form, Flächenanteil oder Materialeigenschaften, können hinsichtlich einiger Optimierungsparameter angepasst werden. Als Optimierungsparameter können vor allem die zu bedämpfenden Frequenzinhalte und die Temperatur dienen.

Dies gilt in entsprechender Weise für die Dämpfungsschicht 12 und gegebenenfalls weitere Dämpfungsschichten, die eine Dämpfung zwischen den Brennstoffeinspritzventilen 3, 4 und dem Brennstoffverteiler 2 ermöglichen.

Die anhand der Fig. 2 beschriebene Ausgestaltung kommt vorzugsweise an jedem Brennstoffeinspritzventil 3, 4 der Anordnung 1 zum Einsatz.

Das Halteelement 15 kann beispielsweise aus einem umgeformten Blech hergestellt werden. Hierbei kann die Dämpfungsschicht 11 als separates Einlegeteil 11 ausgestaltet sein und an der Stützfläche 16 des Halteelements 15 anliegen. Die Dämpfungsschicht 11 kann hierbei sehr dünn sein. Möglich ist auch eine Ausgestaltung, bei der die Dämpfungsschicht 11 mit der Stützfläche 16 des Halteelements 15 verbunden ist. Insbesondere ist eine Verbindung durch Vulkanisieren möglich. Hierfür kann die Dämpfungsschicht 11 aus einem Gummiwerkstoff hergestellt sein. Der Begriff des Gummiwerkstoffs ist hierbei allgemein zu verstehen und umfasst neben einem Naturkautschuk auch synthetische Gummiwerkstoffe.

Bei dem anhand der Fig. 2 beschriebenen ersten Ausführungsbeispiel wirkt die Dämpfungsschicht 11 gewissermaßen als einseitige Dämpfungsschicht 11, die auf einer Seite des Kragens 17 der Tasse 9 angeordnet ist.

Fig. 3 zeigt einen auszugsweisen, schematischen, axialen Schnitt durch die in Fig. 2 dargestellte Anordnung 1 entsprechend einem zweiten Ausführungsbeispiel. In diesem Ausführungsbeispiel weist das Halteelement 15 eine konische Anlagefläche 30 auf, die beispielsweise durch eine Fase 30 gebildet sein kann. Die Dämpfungsschicht 11 erstreckt sich hierbei auch über die konische Anlagefläche 30 des Halteelements 15. Das Brennstoffeinspritzventil 3 stützt sich mit seinem Bund 25 mittels der Dämpfungsschicht 11 an der konischen Anlagefläche 30 ab.

Außerdem ist eine weitere Dämpfungsschicht 31 vorgesehen, die zwischen dem Halteabschnitt 22 und der Zunge 18 des Kragens 17 angeordnet ist. Der Halteabschnitt 22 des Halteelements 15 stützt sich über die weitere Dämpfungsschicht 31 an dem Kragen 17 der Tasse 9 ab. In entsprechender Weise ist auch zwischen dem Halteabschnitt 23 und der Zunge 19 des Kragens 17 eine weitere Dämpfungsschicht 32 angeordnet. Somit stützt sich auch der Halteabschnitt 23 mittels der weiteren Dämpfungsschicht 32 an dem Kragen 17 der Tasse 9 ab. Somit sind gewissermaßen beidseitig des Kragens 17 Dämpfungsschichten 11, 31, 32 vorgesehen. Die Dämpfungsschichten 11, 31, 32 ermöglichen eine besonders vorteilhafte Bedämpfung der Schwingungen, die über die mechanische Verbindung zwischen dem Brennstoffeinspritzventil 3 und dem Brennstoffverteiler 2 übertragen werden können. Die weiteren Dämpfungsschichten 31, 32 können entsprechend der Dämpfungsschicht 11 ausgestaltet sein. Hierbei ist auch eine Ausgestaltung aus unterschiedlichen Werkstoffen möglich.

Fig. 4 zeigt einen auszugsweisen, schematischen, axialen Schnitt durch die in Fig. 2 dargestellte Anordnung 1 entsprechend einem dritten Ausführungsbeispiel. In diesem Ausführungsbeispiel erstreckt sich die Dämpfungsschicht 11, die an der Stützfläche 16 des Halteelements 15 vorgesehen ist, auch entlang einer Innenseite 35 des Halteabschnitts 22 sowie entlang einer Innenseite 36 des Halteabschnitts 23. Der Halteabschnitt 22 ist dadurch über die Dämpfungsschicht 11 an der Zunge 18 des Kragens 17 abgestützt. Ferner ist der Halteabschnitt 23 über die Dämpfungsschicht 11 an der Zunge 19 des Kragens 17 abgestützt. Somit kann durch eine einzige Dämpfungsschicht 11, die als durchgehende Dämpfungsschicht 11 ausgestaltet ist, eine beidseitige Dämpfung zwischen dem Kragen 17 und dem Halteelement 15 erzielt werden.

Bei den anhand der Fig. 1 bis 4 beschriebenen Ausführungsbeispielen können die Dämpfungsschichten 11, 12, 31, 32 jeweils als separate Einlegeteile ausgestaltet sein. Ein oder mehrere der Dämpfungsschichten 11, 12, 31, 32 können auch mit dem diesbezüglichen Halteelement 15 verbunden sein, wobei insbesondere eine stoffschlüssige Verbindung durch Vulkanisieren möglich ist. Die weiteren Dämpfungsschichten 31, 32 können als voneinander getrennte Dämpfungsschichten 31, 32 ausgestaltet sein. Allerdings ist auch eine Ausgestaltung möglich, bei der eine weitere Dämpfungsschicht 31, 32 die Funktion der beiden Dämpfungsschichten 31, 32 übernimmt. Hierbei kann die weitere Dämpfungsschicht 31, 32 beispielsweise U-förmig ausgestaltet sein. Entsprechend kann auch die Dämpfungsschicht 11 U-förmig ausgestaltet sein, wie es anhand der Fig. 2 veranschaulicht ist.

Somit können durch ein oder mehrere Dämpfungsschichten 11, 31, 32 je nach Ausgestaltung mehrere Vorteile erzielt werden. Durch die Entkopplung kann die Körperschallübertragung in den Brennstoffverteiler 2 und damit in die Anbaustruktur, insbesondere den Zylinderkopf 7, bei gleichzeitiger Erfüllung der Funktions- und Festigkeitsanforderungen verbessert werden. Hierdurch nehmen Geräuschemissionen von dem Brennstoffverteiler 2 ab.

Trotz der Dämpfungsschichten 11, 31, 32 kann eine relativ steife Anbindung des Brennstoffeinspritzventils 3 an den Brennstoffverteiler 2 gewährleistet werden. Die Nachgiebigkeit des Brennstoffeinspritzventils 3 und entsprechend des Brennstoffeinspritzventils 4 erhöht sich nur leicht und erfüllt alle Funktionsanforderungen, wie eine geringe Relativbewegung der Brennstoffeinspritzventile 3, 4, und Festigkeitsanforderungen, insbesondere bezüglich eines Verschleiß des Dichtrings 27. Somit können Akustik-, Funktions- und Festigkeitsanforderungen, die sich aus dem Design der Brennstoffventile 3, 4 und dem Design des Brennstoffverteilers 2 ergeben, gleichzeitig erfüllt werden.

Durch eine mögliche Ausgestaltung des Halteelements 15 aus einem umgeformten Blech können Radien und Konturanpassungen zur zugeordneten Tasse 9 und zum Brennstoffeinspritzventil 3 vorgenommen werden, um Linienberührungen zu verhindern.

Durch die kardanische Lagerung der Brennstoffeinspritzventile 3, 4 kann der volle Toleranzausgleich erhalten bleiben.

In vorteilhafter Weise werden die Dämpfungsschichten 11, 31, 32 gegenüber der Umgebung geschützt, da sie sich gewissermaßen innerhalb des Halteelements 15 befinden. Durch Einvulkanisieren kann ein besonders guter Schutz gegenüber Abrasion erzielt werden.

Ferner kann der Montageaufwand gering gehalten werden, da die Anzahl der Bauteile gering ist. Ferner ergibt sich auch eine kompakte Ausgestaltung, bei der durch die Dämpfungsschichten 11, 31, 32 kein größerer Einbauraum benötigt wird.

Ferner kann die Entkopplung an einem leitungsangebundenen Design für den Brennstoffverteiler 2 eingesetzt werden, indem die als Entkoppelelemente dienenden Dämpfungsschichten 11, 31, 32 an der Fügestelle zwischen dem aufgehängten Brennstoffeinspritzventil 3 und dem Funktionsblock, nämlich dem Brennstoffverteiler 2, eingesetzt werden.

Die Erfindung ist nicht auf die beschriebenen Ausführungsbeispiele beschränkt.

## Patentansprüche

1. Anordnung (1), insbesondere Brennstoffeinspritzanlage zur Hochdruckeinspritzung bei Brennkraftmaschinen, mit einem Brennstoffverteiler (2) und mehreren Brennstoffeinspritzventilen (3, 4), wobei jedes der Brennstoffeinspritzventile (3, 4) an einer Tasse (9, 10) des Brennstoffverteilers (2) angeordnet ist und wobei zumindest eines der Brennstoffeinspritzventile (3, 4) durch ein Halteelement (15) an der zugeordneten Tasse (9, 10) befestigt ist,
**dadurch gekennzeichnet,**
**dass** das Haltelement (15) eine Stützfläche (16) aufweist, dass die Tasse (9) an der Unterseite (20) der Tasse (9) eine Anlagefläche (21) aufweist, mit der sich die Tasse (9) mittels zumindest einer Dämpfungsschicht (11) an der Stützfläche (16) des Halteelements (15) abstützt, dass das Halteelement (15) an der Tasse (9) fixiert ist und dass das Brennstoffeinspritzventil (3) einen Bund (25) aufweist, der zumindest mittelbar an dem Halteelement (15) abgestützt ist, wobei die Tasse (9) einen Kragen (17) und das Halteelement (15) Halteabschnitte (22, 23) derart aufweist, dass die Halteabschnitte (22, 23) des Halteelements (15) den Kragen (17) der Tasse (9) beidseitig hintergreifen.

2. Anordnung nach Anspruch 1,
**dadurch gekennzeichnet,**
**dass** der Bund (25) des Brennstoffeinspritzventils (3) zumindest mittelbar an der Stützfläche (16) des Halteelements (15) abgestützt ist und/oder dass der Bund (25) des Brennstoffeinspritzventils (3) mittels der Dämpfungsschicht (11) an dem Halteelement (15) abgestützt ist und/oder dass der Bund (25) des Brennstoffeinspritzventils (3) mittels der Dämpfungsschicht (11) an der Stützfläche (16) des Halteelements (15) abgestützt ist.

3. Anordnung nach Anspruch 1,
**dadurch gekennzeichnet,**
**dass** der Halteabschnitt (22, 23) als U-förmig gebogener Halteabschnitt (22, 23) ausgestaltet ist.

4. Anordnung nach Anspruch 1 oder 3,
**dadurch gekennzeichnet,**
**dass** der Halteabschnitt (22, 23) des Halteelements (15) direkt an dem Kragen (17) der Tasse (9) anliegt.

5. Anordnung nach Anspruch 1 oder 3,
**dadurch gekennzeichnet,**
**dass** der Halteabschnitt (22, 23) des Halteelements (15) mittels zumindest einer weiteren Dämpfungsschicht (31, 32) an dem Kragen (17) der Tasse (9) abgestützt ist.

6. Anordnung nach Anspruch 1 oder 3,
**dadurch gekennzeichnet,**
**dass** sich die Dämpfungsschicht (11), die an der Stützfläche (16) vorgesehen ist, auch entlang einer Innenseite (35, 36) des Halteabschnitts (22, 23) des Halteelements (15) erstreckt und dass der Halteabschnitt (22, 23) des Halteelements (15) mittels der Dämpfungsschicht (11) an dem Kragen (17) der Tasse (9) abgestützt ist.

7. Anordnung nach einem der Ansprüche 1 bis 6,
**dadurch gekennzeichnet,**
**dass** die Dämpfungsschicht (11) beziehungsweise die weitere Dämpfungsschicht (31, 32) auf einem viskoelastischen Werkstoff basiert.

8. Anordnung nach einem der Ansprüche 1 bis 7,
**dadurch gekennzeichnet,**
**dass** die Dämpfungsschicht (11) beziehungsweise die weitere Dämpfungsschicht (31, 32) mit dem Halteelement (15) verbunden ist.

9. Anordnung nach einem der Ansprüche 1 bis 7,
**dadurch gekennzeichnet,**
**dass** die Dämpfungsschicht (11) beziehungsweise die weitere Dämpfungsschicht (31, 32) als separates Einlegeteil (11, 31, 32) ausgestaltet ist.

## Claims

1. Arrangement (1), in particular fuel injection system for high-pressure injection in internal combustion engines, having a fuel distributor (2) and having multiple fuel injection valves (3, 4), wherein each of the fuel injection valves (3, 4) is arranged on a cup (9, 10) of the fuel distributor (2), and wherein at least one of the fuel injection valves (3, 4) is fastened to the associated cup (9, 10) by way of a holding element (15),
**characterized**
**in that** the holding element (15) has a support surface (16), in that the cup (9) has, on the underside (20) of the cup (9), a contact surface (21) by way of which the cup (9) is supported on the support surface (16) of the holding element (15) via at least one damping layer (11), in that the holding element (15) is fixed to the cup (9), and in that the fuel injection valve (3) has a collar (25) which is supported at least indirectly on the holding element (15), wherein the cup (9) has a collar (17) and the holding element (15) has holding sections (22, 23), in such a way that the holding sections (22, 23) of the holding element (15) engage behind the collar (17) of the cup (9) at both sides.

2. Arrangement according to Claim 1,
**characterized**
**in that** the collar (25) of the fuel injection valve (3) is supported at least indirectly on the support surface (16) of the holding element (15), and/or in that the collar (25) of the fuel injection valve (3) is supported on the holding element (15) via the damping layer (11), and/or in that the collar (25) of the fuel injection valve (3) is supported on the support surface (16) of the holding element (15) via the damping layer (11).

3. Arrangement according to Claim 1,
**characterized**
**in that** the holding section (22, 23) is designed as a holding section (22, 23) which is bent in a U-shape.

4. Arrangement according to Claim 1 or 3,
**characterized**
**in that** the holding section (22, 23) of the holding element (15) bears directly against the collar (17) of the cup (9).

5. Arrangement according to Claim 1 or 3,
**characterized**
**in that** the holding section (22, 23) of the holding element (15) is supported on the collar (17) of the cup (9) via at least one further damping layer (31, 32).

6. Arrangement according to Claim 1 or 3,
**characterized**
**in that** the damping layer (11) which is provided on the support surface (16) also extends along an inner side (35, 36) of the holding section (22, 23) of the holding element (15), and in that the holding section (22, 23) of the holding element (15) is supported on the collar (17) of the cup (9) via the damping layer (11).

7. Arrangement according to one of Claims 1 to 6,
**characterized**
**in that** the damping layer (11) and/or the further damping layer (31, 32) is based on a viscoelastic material.

8. Arrangement according to one of Claims 1 to 7,
**characterized**
**in that** the damping layer (11) and/or the further damping layer (31, 32) is connected to the holding element (15).

9. Arrangement according to one of Claims 1 to 7,
**characterized**
**in that** the damping layer (11) and/or the further damping layer (31, 32) is in the form of a separate inlay part (11, 31, 32).

## Revendications

1. Ensemble (1), notamment installation d'injection de carburant pour l'injection de haute pression dans des moteurs à combustion interne, avec un distributeur de carburant (2) et plusieurs soupapes d'injection de carburant (3, 4), chacune des soupapes d'injection de carburant (3, 4) étant disposée au niveau d'une tasse (9, 10) du distributeur de carburant (2) et au moins une des soupapes d'injection de carburant (3, 4) étant fixée à la tasse (9, 10) associée par un élément de maintien (15), **caractérisé en ce que** l'élément de maintien (15) comporte une surface d'appui (16), que la tasse (9) comporte une surface d'installation (21) au niveau du côté inférieur (20) de la tasse (9), avec laquelle la tasse (9) appuie contre la surface d'appui (16) de l'élément de maintien (15) par le biais d'au moins une couche amortissante (11), que l'élément de maintien (15) est fixé au niveau de la tasse (9) et que la soupape d'injection de carburant (3) comporte un lien (25) appuyant au moins indirectement contre l'élément de maintien (15), la tasse (9) comportant un col (17) et l'élément de maintien (15) comportant des sections de maintien (22, 23) de telle sorte que les sections de maintien (22, 23) de l'élément de maintien (15) engrènent des deux côtés, par l'arrière, le col (17) de la tasse (9).

2. Ensemble selon la revendication 1, **caractérisé en ce que** le lien (25) de la soupape d'injection de carburant (3) appuie au moins indirectement contre la surface d'appui (16) de l'élément de maintien (15) et/ou que le lien (25) de la soupape d'injection de carburant (3) appuie contre l'élément de maintien (15) par le biais de la couche amortissante (11) et/ou que le lien (25) de la soupape d'injection de carburant (3) appuie contre la surface d'appui (16) de l'élément de maintien (15) par le biais de la couche amortissante (11).

3. Ensemble selon la revendication 1, **caractérisé en ce que** la section de maintien (22, 23) est configurée sous la forme d'une section de maintien (22, 23) incurvée en forme de U.

4. Ensemble selon la revendication 1 ou 3, **caractérisé en ce que** la section de maintien (22, 23) de l'élément de maintien (15) repose directement contre le col (17) de la tasse (9).

5. Ensemble selon la revendication 1 ou 3, **caractérisé en ce que** la section de maintien (22, 23) de l'élément de maintien (15) appuie contre le col (17) de la tasse (9) par le biais d'au moins une couche amortissante (31, 32) supplémentaire.

6. Ensemble selon la revendication 1 ou 3, **caractérisé en ce que** la couche amortissante (11) prévue au niveau de la surface d'appui (16) s'étend également le long d'un côté intérieur (35, 36) de la section de maintien (22, 23) de l'élément de maintien (15) et que la section de maintien (22, 23) de l'élément de maintien (15) appuie contre le col (17) de la tasse (9) par le biais de la couche amortissante (11).

7. Ensemble selon l'une quelconque des revendications 1 à 6, **caractérisé en ce que** la couche amortissante (11) et/ou la couche amortissante (31, 32) supplémentaire a une base de matériau viscoélastique.

8. Ensemble selon l'une quelconque des revendications 1 à 7, **caractérisé en ce que** la couche amortissante (11) et/ou la couche amortissante (31, 32) supplémentaire est reliée à l'élément de maintien (15).

9. Ensemble selon l'une quelconque des revendications 1 à 7, **caractérisé en ce que** la couche amortissante (11) et/ou la couche amortissante (31, 32) supplémentaire est configurée sous la forme d'une partie insérée (11, 31, 32) séparée.
